# EUROPEAN PATENT APPLICATION

(11) **EP 4 841 439 A1**
(43) Date of publication of application: **18.11.2026**
(21) Application number: 25738430.5
(22) Date of filing: 08.01.2025
(51) Int. Cl.: G06F 9/451

(54) **INTERACTION METHOD AND APPARATUS, DEVICE, AND STORAGE MEDIUM**

(30) Priority: 12.01.2024 CN 202410052048
(71) Applicant: Beijing Zitiao Network Technology Co., Ltd., Beijing 100190 (CN)
(72) Inventor: ZHAO, Yuxuan, Beijing 100028 (CN); SUN, Yuze, Beijing 100028 (CN)
(74) Representative: Grünecker Patent- und Rechtsanwälte PartG mbB
(86) International application number: PCT/CN2025/071168
(87) International publication number: WO 2025/148901

(57) **Abstract**

The present disclosure provides an interaction method, an apparatus, a device, and a storage medium, which relate to the field of computer technologies. The method includes: displaying a chat page of a target chat including at least two users; receiving a preset interactive operation input by a first user within the target chat based on the chat page; displaying an event trigger control of a preset interactive event in response to the preset interactive operation satisfying a preset condition; and displaying an interactive page of the preset interactive event in response to a trigger operation on the event trigger control, where the interactive page is configured for a target user to input a target interactive operation associated with the preset interactive event, to obtain a preset virtual resource, and the target user is a user among the at least two users and includes the first user.

## Description

### CROSS-REFERENCE TO RELATED APPLICATION(S)

The present application claims the benefit of Chinese Patent Application No. 202410052048.0, filed on January 12, 2024. The entire teachings of the above application are incorporated herein by reference.

### FIELD

Embodiments of the present disclosure relate to the field of computer technologies and, in particular, to an interaction method, an apparatus, a device, and a storage medium.

### BACKGROUND

With the rapid development of information technology and the popularization of the mobile Internet, functions of applications are more and more abundant. In some functions, users may be granted various virtual resources such as coupons or red envelopes.

### SUMMARY

Embodiments of the present disclosure provide an interaction method, an apparatus, a device, and a storage medium.

In a first aspect, an embodiment of the present disclosure provides an interaction method, including, at a first user side: displaying a chat page of a target chat, where the target chat includes at least two users; receiving a preset interactive operation input by a first user within the target chat based on the chat page; displaying an event trigger control of a preset interactive event in response to the preset interactive operation satisfying a preset condition; and displaying, in response to a trigger operation on the event trigger control, an interactive page of the preset interactive event, where the interactive page is configured for a target user to input a target interactive operation associated with the preset interactive event, to obtain a preset virtual resource, and the target user is a user among the at least two users and includes the first user.

In a second aspect, an embodiment of the present disclosure further provides an interaction apparatus, configured at a first user side and including: a chat page displaying module, configured to display a chat page of a target chat, where the target chat includes at least two users; a preset interactive operation receiving module, configured to receive a preset interactive operation input by a first user within the target chat based on the chat page; an event trigger control displaying module, configured to display an event trigger control of a preset interactive event in response to the preset interactive operation satisfying a preset condition; and an interactive page displaying module, configured to display, in response to a trigger operation on the event trigger control, an interactive page of the preset interactive event, where the interactive page is configured for a target user to input a target interactive operation associated with the preset interactive event, to obtain a preset virtual resource, and the target user is a user among the at least two users and includes the first user.

In a third aspect, an embodiment of the present disclosure further provides an electronic device, including: one or more processors; and a storage apparatus, configured to store one or more programs, where the one or more programs, when executed by the one or more processors, cause the one or more processors to implement the interaction method provided by the embodiments of the present disclosure.

In a fourth aspect, an embodiment of the present disclosure further provides a storage medium including computer-executable instructions, where the computer-executable instructions, when executed by a computer processor, are used to perform the interaction method provided by the embodiments of the present disclosure.

### BRIEF DESCRIPTION OF THE DRAWINGS

The foregoing and other features, advantages, and aspects of the embodiments of the present disclosure become more apparent with reference to the following specific implementations and in conjunction with the drawings. Throughout the drawings, the same or similar reference numerals denote the same or similar elements. It should be understood that the drawings are schematic and that parts and elements are not necessarily drawn to scale.
Fig. 1 is a schematic flowchart of an interaction method according to an embodiment of the present disclosure;
Fig. 2 is a schematic diagram of interface interaction in an interaction method according to an embodiment of the present disclosure;
Fig. 3 is a schematic diagram of interface interaction in another interaction method according to an embodiment of the present disclosure;
Fig. 4 is a schematic flowchart of an interaction method according to an embodiment of the present disclosure;
Fig. 5 is a schematic diagram of interface interaction in still another interaction method according to an embodiment of the present disclosure;
Fig. 6 is a schematic diagram of a structure of an interaction apparatus according to an embodiment of the present disclosure; and
Fig. 7 is a schematic diagram of a structure of an electronic device according to an embodiment of the present disclosure.

### DETAILED DESCRIPTION OF EMBODIMENTS

The embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method implementations of the present disclosure may be performed in different orders and/or in parallel. In addition, the method implementations may include additional steps and/or omit the execution of the illustrated steps. The scope of the present disclosure is not limited in this respect.

The term "include/comprise" and a variant thereof used herein are open-ended inclusions, that is, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms are given in the following description.

It should be noted that concepts such as "first" and "second" mentioned in the present disclosure are only used to distinguish between different apparatuses, modules, or units and are not used to limit an order or interdependence of functions performed by these apparatuses, modules, or units.

It should be noted that the modifiers "one" and "multiple" mentioned in the present disclosure are exemplary rather than restrictive, and those skilled in the art should understand that they should be understood as "one or multiple" unless otherwise explicitly specified in the context.

The names of messages or information exchanged between multiple apparatuses in the implementations of the present disclosure are configured for illustrative purposes only and are not used to limit the scope of these messages or information.

It may be understood that before the technical solutions disclosed in the embodiments of the present disclosure are used, users should be informed of the type, the range of use, use scenarios, and the like of personal information involved in the present disclosure and the authorization of the users should be obtained in an appropriate manner in accordance with relevant laws and regulations.

For example, in response to receiving an active request from a user, prompt information is sent to the user to clearly inform the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, and the prompt information may be displayed in text in the pop-up window. In addition, the pop-up window may also include a selection control for the user to choose whether to "agree" or "disagree" to provide the personal information to the electronic device.

It may be understood that the above process of notifying the user and obtaining the authorization of the user is only exemplary and does not limit the implementations of the present disclosure, and other manners that satisfy the relevant laws and regulations may also be applied in the implementations of the present disclosure.

It may be understood that the data involved in the technical solution (including but not limited to the data itself, acquisition or use of the data) shall comply with requirements of corresponding laws, regulations, and related provisions.

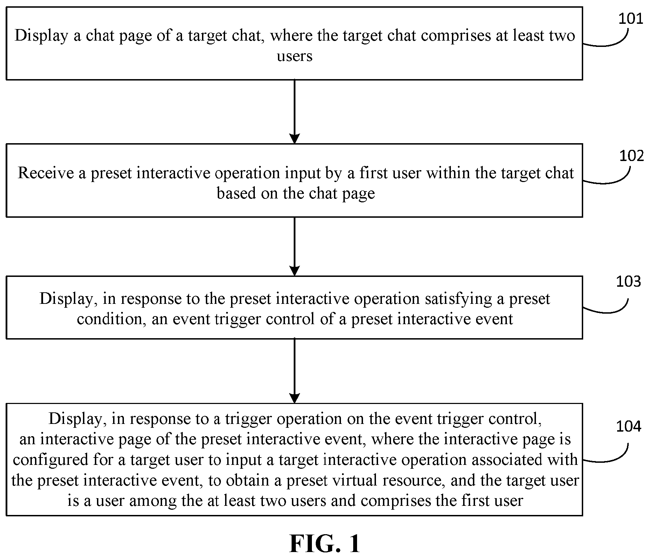

Fig. 1 is a schematic flowchart of an interaction method according to an embodiment of the present disclosure. The embodiment of the present disclosure is applicable to a case of interaction in a group chat. The method may be performed by an interaction apparatus. The apparatus may be implemented in the form of software and/or hardware. Optionally, the apparatus is implemented by an electronic device. The electronic device may be a mobile terminal, such as a mobile phone, a smart watch, a tablet, or a personal digital assistant, or may be a device, such as a personal computer (PC) or a server. The method is applied to a first user side, that is, the electronic device may be configured as a first user side device, and the first user side device is an electronic device used by a first user.

As shown in Fig. 1, the method comprises the following steps.

Step 101: a chat page of a target chat is displayed, where the target chat includes at least two users.

In the embodiment of the present disclosure, the target chat includes at least two users, that is, the target chat is a group chat involving multiple participants, and a specific number of the participants is not limited. The participants in the target chat include a first user. The target chat may be an instant messaging chat, and the users in the target chat may interact with each other by sending chat messages, where the chat messages may include content such as text, symbols, images, audio, and video. Specific content displayed on the chat page is not limited. For example, the chat messages may be displayed, and various interactive controls may also be displayed.

Step 102: a preset interactive operation input by a first user within the target chat based on the chat page is received.

In the embodiment of the present disclosure, the preset interactive operation is understood as an interactive operation used to initiate display of a trigger entry for a preset interactive event, and the preset interactive event is an interactive event used to obtain a preset virtual resource. The preset virtual resource may include a coupon, a red envelope, or the like. A specific input manner of the preset interactive operation is not limited. Exemplarily, the preset interactive operation may be a trigger operation on a preset interactive control or sending a chat message that satisfies a preset requirement, which may be set according to a practical requirement.

Optionally, preset prompt information is displayed in a preset area of the chat page, the preset prompt information being used to prompt to trigger the preset interactive event by inputting the preset interactive operation. After viewing the preset prompt information, the first user may know a trigger manner of the preset interactive event and input the corresponding preset interactive operation.

Step 103: an event trigger control of the preset interactive event is displayed in response to the preset interactive operation satisfying a preset condition.

Exemplarily, the preset condition may be set based on factors such as an operation type, an operation result, and an operation timing of the preset interactive operation, or may be set based on a factor such as a number of users who input the preset interactive operation.

Optionally, the preset interactive operation satisfying the preset condition includes: a number of messages corresponding to the preset interactive operation within the target chat satisfying a first preset threshold. In this way, the display of the event trigger control may be quickly triggered by accumulating a certain number of messages corresponding to the preset interactive operation, thereby improving the interaction effect. The messages corresponding to the preset interactive operation may be chat messages, and the messages corresponding to the preset interactive operation input by the same user or different users may be involved in the statistics of the number of messages.

Optionally, the preset interactive operation satisfying the preset condition includes: a number of target users who input the preset interactive operation within the target chat satisfying a second preset threshold. In this way, interaction manners in the group chat may be enriched, and the interaction effect may be improved.

Optionally, the preset interactive operation satisfying the preset condition may include: the number of messages corresponding to the preset interactive operation within the target chat satisfying the first preset threshold, and the number of target users who input the preset interactive operation within the target chat satisfying the second preset threshold.

Exemplarily, satisfying the preset threshold (the first preset threshold or the second preset threshold) may be greater than or equal to the preset threshold. When the preset threshold is a boundary value of a number interval, satisfying the preset threshold may also be within a corresponding number interval determined based on two preset thresholds. A specific preset threshold may be preset (for example, 3, or 3 to 5) or dynamically set according to a practical situation. Exemplarily, the preset threshold and a minimum boundary value and/or a boundary value of the number interval may be determined based on a product of a total number of users in the target chat and a preset ratio value.

In the embodiment of the present disclosure, if the number of messages corresponding to the preset interactive operation within the target chat satisfies the first preset threshold, and/or the number of target users who input the preset interactive operation within the target chat satisfies the second preset threshold, it may be considered that the display of the trigger entry for the preset interactive event is successfully initiated, and the trigger entry is displayed in the form of the event trigger control. The event trigger control may be displayed in a preset position on the chat page. Optionally, the preset interactive operation is a trigger operation on a preset interactive control, and the preset position is associated with a display position of the preset interactive control. For example, the display position of the preset interactive control is the same as a display position of the event trigger control, and both are the preset position.

Optionally, the target user also includes a second user, and the method may further include: triggering to present the event trigger control at a second user side in response to the preset interactive operation satisfying the preset condition. In this way, the event trigger control may be displayed on a plurality of user sides, which facilitates a plurality of users in the chat to independently trigger, on their own sides, the display of the interactive page of the preset interactive event and the acquisition of the virtual resource, thereby improving the interaction effect.

Optionally, if the preset interactive operation satisfies the preset condition and if each of the target user sides currently presents the chat page of the target chat, the event trigger control of the preset interactive event may be synchronously displayed on each of the target user sides. That is, optionally, in response to the number of messages corresponding to the preset interactive operation within the target chat satisfying the first preset threshold, and/or in response to the number of target users who input the preset interactive operation within the target chat satisfying the second preset threshold, the event trigger control is triggered to be displayed at the second user side. In this way, the event trigger control is displayed on the user sides participating in the input of the preset interactive operation, and the preset interactive event may be independently triggered on each of the user sides, which facilitates the target users to trigger, on their own sides, the display of the interactive page of the preset interactive event, thereby improving the interaction effect.

Step 104: an interactive page of the preset interactive event is displayed in response to a trigger operation on the event trigger control, where the interactive page is configured for a target user to input a target interactive operation associated with the preset interactive event, to obtain a preset virtual resource, and the target user is a user among the at least two users and includes the first user.

Exemplarily, the trigger operation on the event trigger control may be, for example, a click operation or a long press operation. After the trigger operation of the first user on the event trigger control is received, the interactive page of the preset interactive event is displayed on the first user side. The interactive page is a page for the target user to obtain the preset virtual resource by inputting the target interactive operation associated with the preset interactive event.

Optionally, trigger operations of different target users on the event trigger control may be independent or associated. For example, the target user also includes a second user different from the first user (for example, the target user may be all users except the first user). After the first user inputs the trigger operation on the event trigger control, the event trigger control may be displayed on the second user side. After the second user side receives a trigger operation on the event trigger control input by the second user, the interactive page of the preset interactive event is displayed on a chat page of the second user side.

Optionally, if each of the target user sides currently presents the chat page of the target chat, the interactive page of the preset interactive event may be synchronously displayed on each of the target user sides, that is, the preset interactive event may be triggered by any user among the target users. In this way, the interactive page of the preset interactive event may be synchronously displayed on each of the target user sides, so that each of the target users may independently obtain the preset virtual resource within the same period of time, thereby improving the interaction effect based on the acquisition of the preset virtual resource.

Optionally, this step may also include: displaying prompt information of a preset countdown in response to the trigger operation on the event trigger control; and displaying the interactive page of the preset interactive event in response to an end of the preset countdown. In this way, preparation time may be provided for the first user, and if there is a second user, the display of the interactive page of the preset interactive event on the second user side may also be awaited during the countdown, thereby improving the interaction effect.

Optionally, this step may also include: triggering to send a preset invitation to a second user side in response to the trigger operation on the event trigger control; and displaying the interactive page of the preset interactive event in response to the second user accepting the preset invitation. In this way, the interactive page of the preset interactive event is displayed only after the second user accepts the invitation, thereby improving the interaction effect between the target users.

Optionally, this step may also include: sending a preset invitation to a second user side and displaying prompt information of a preset countdown in response to the trigger operation on the event trigger control; and displaying the interactive page of the preset interactive event in response to an end of the preset countdown and/or the second user accepting the preset invitation. In this way, while ensuring the efficiency of displaying the interactive page, the timing of each of the target users to enter the interactive page may be coordinated, thereby further improving the interaction effect based on the acquisition of the preset virtual resource.

Exemplarily, the preset invitation may be sent through a server corresponding to the target chat. After receiving the preset invitation, the second user side may present an invitation message, and the second user may accept the preset invitation through the invitation message and/or accept the preset invitation by triggering an event trigger control displayed on the second user side. A duration of the preset countdown may be set according to a practical requirement, for example, 5 seconds. If each of the second users has accepted the preset invitation before the end of the preset countdown, the interactive page of the preset interactive event may be displayed on each of the target user sides. If some second users have accepted the preset invitation before the end of the preset countdown, the interactive page of the preset interactive event may be displayed on both the first user side and the second user sides that have accepted the invitation.

Exemplarily, the target interactive operation may be an interactive operation of a preset type input based on a preset element associated with the preset virtual resource displayed on the interactive page, and the preset type may be, for example, clicking or sliding. The preset element may include, for example, identification information of the preset virtual resource, and the identification information may include, for example, a resource name or a resource cover.

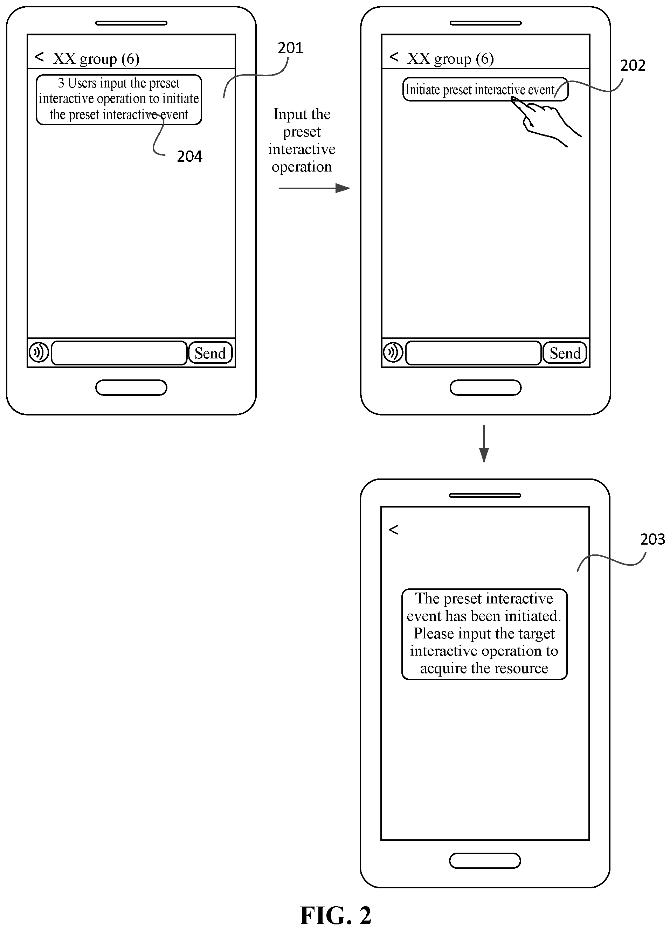

Fig. 2 is a schematic diagram of interface interaction of an interaction method according to an embodiment of the present disclosure. As shown in Fig. 2, a chat page 201 of a target chat "XX group" is displayed, and the target chat includes six users. Assuming that a first user is user A, after user A inputs a preset interactive operation on the chat page 201, assuming that a preset threshold is 3 users, if user B and user C have previously input the preset interactive operation, the preset threshold is satisfied at this time, and target users include user A, user B, and user C. An event trigger control 202 of a preset interactive event is displayed. After user A clicks on the event trigger control 202, an interactive page 203 of the preset interactive event is displayed. Optionally, the user A is prompted, on the interactive page 203, to obtain a preset virtual resource by inputting a target interactive operation.

According to the interaction method provided by the embodiment of the present disclosure, the event trigger control for triggering the preset interactive event may be provided in the group chat, and the event trigger control is displayed to the first user when the first user inputs the preset interactive operation and the preset interactive operation satisfies the preset condition. The first user may enter the interactive page of the preset interactive event by triggering the event trigger control and obtain the preset virtual resource by inputting the target interactive operation associated with the preset interactive event, thereby improving the interaction effect in the group chat and enriching chat interaction manners.

In some embodiments, the preset interactive operation includes sending a chat message of a target type. In this way, the display of the event trigger control may be conveniently triggered by sending the chat message. In addition, if the preset interactive operation satisfying the preset condition includes that the number of target users who input the preset interactive operation within the target chat satisfies the second preset threshold, each user in the target chat may more intuitively see which users have already input the preset interactive operation through the chat messages displayed on the chat page.

In some embodiments, the chat message of the target type includes a chat message associated with a preset theme. In this way, the users in the target chat may be enabled to send chat messages around the preset theme, thereby improving the interaction effect in the chat.

Exemplarily, the chat message associated with the preset theme may include an emoji message and/or a text message associated with the preset theme. The preset theme may be related to festivals or activities, such as a Spring Festival theme or a birthday activity theme.

In some embodiments, after the displaying the chat page of the target chat, the method further includes: displaying, on the chat page, associated prompt information of the first preset threshold and/or the second preset threshold, where the associated prompt information includes number information of the first preset threshold and/or the second preset threshold and/or number statistical information of the target users. In this way, the users in the target chat may more intuitively understand the initiation condition and/or the initiation progress of the display of the trigger entry for the preset interactive event.

The number information may be a specific value of the preset threshold; and the number statistical information may be the number of users who have become target users by inputting the preset interactive operation. Exemplarily, as shown in Fig. 2, the associated prompt information 204 is displayed on the chat page 201, and the associated prompt information 204 includes the number information "3 users" of the preset threshold. Optionally, if user B and user C have previously input the preset interactive operation, the associated prompt information 204 may be replaced with "2 users have input the preset interactive operation, and 1 more user is needed to initiate the preset interactive event".

In some embodiments, after the displaying the interactive page of the preset interactive event, the method further includes: displaying, on the interactive page, a plurality of preset elements associated with the preset virtual resource, where the preset elements are dynamic effect elements; and displaying an acquisition page of the preset virtual resource in response to a target interactive operation on the preset elements. In this way, the plurality of preset elements that have dynamic effects and are associated with the preset virtual resource are simultaneously displayed on the interactive page, and the display of the acquisition page of the preset virtual resource is triggered based on the target interactive operation on the preset elements, thereby further improving the interaction effect.

Optionally, the dynamic effect element may be an element with a dynamic effect of a raining style. For example, the preset element containing the image identification of the preset virtual resource moves downward from above the interactive page in the raining style. The plurality of preset elements associated with the preset virtual resource may be simply referred to as a resource rain.

In some embodiments, after the displaying the chat page of the target chat, the method further includes: displaying a preset control on the chat page. The receiving a preset interactive operation input by a first user within the target chat based on the chat page includes: sending the chat message of the target type in the target chat in response to a trigger operation of the first user on the preset control. In this way, the input efficiency of the chat message may be improved, thereby improving the trigger efficiency of the preset interactive event and the acquisition efficiency of the virtual resource.

Optionally, a chat message associated with a preset theme is sent in the target chat in response to the trigger operation of the first user on the preset control. For example, a candidate message content set associated with the preset theme may be preset, and in response to the trigger operation of the first user on the preset control, one piece of candidate message content is randomly selected, from the candidate message content set, as target message content, and a first chat message associated with the preset theme is sent in the target chat, the first chat message being generated based on the target message content.

Optionally, the display position of the preset control is associated with the display position of the associated prompt information. In this way, it is convenient for the user to quickly locate the preset control after viewing the associated prompt information.

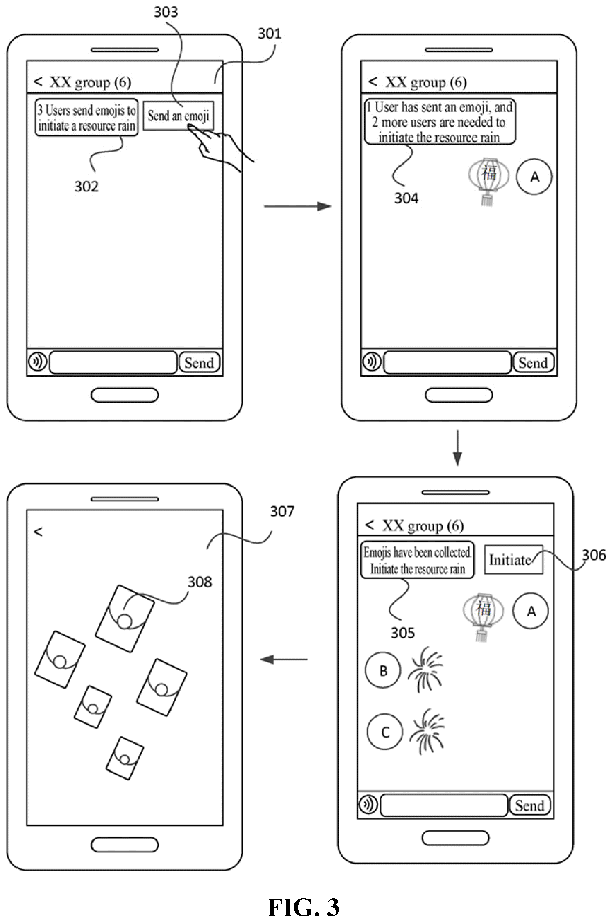

Fig. 3 is a schematic diagram of interface interaction of another interaction method according to an embodiment of the present disclosure. As shown in Fig. 3, a chat page 301 of a target chat is displayed, and first associated prompt information 302 of a preset threshold and a preset control 303 are displayed in association on the chat page 301. Assuming that a first user is user A, after user A clicks on the preset control 303, a lantern emoji message of a Spring Festival theme is randomly sent. Subsequently, the first associated prompt information 302 is updated to second associated prompt information 304. After user B and user C send firework emoji messages of the Spring Festival theme by triggering preset controls on their own sides, assuming that a preset threshold is satisfied at this time, target users include user A, user B, and user C, the second associated prompt information 304 is updated to third associated prompt information 305, and an event trigger control 306 of a preset interactive event is displayed. After user A clicks on the event trigger control 306, a resource rain is initiated, and an interactive page 307 of the preset interactive event is displayed, and a plurality of preset elements 308 are displayed on the interactive page 307.

In some embodiments, the chat message of the target type includes an emoji message associated with the preset theme. After the displaying the chat page of the target chat, the method further includes: displaying a candidate emoji control set on the chat page, where candidate emoji controls in the candidate emoji control set are associated with the preset theme. The receiving a preset interactive operation input by a first user within the target chat based on the chat page includes: sending an emoji message associated with a target emoji control in the target chat in response to a trigger operation of the first user on the target emoji control in the candidate emoji control set. In this way, the flexibility of sending the emoji message may be improved, thereby improving the interaction effect.

Exemplarily, the candidate emoji control may contain image information of the candidate message content mentioned above, and the user may preview a style of the emoji message to be sent through the image information. Optionally, the candidate emoji control set is displayed on the chat page in response to a trigger operation on a target control. The target control may be the same as or different from the preset control mentioned above.

In some embodiments, at least one of a first target image displayed on the interactive page, a second target image displayed on the acquisition page, or the preset element is associated with target content, where the target content includes message content of the chat message of the target type and/or theme content of the preset theme, and the chat message of the target type includes a chat message associated with the preset theme. In this way, the connection between the image and/or the preset element displayed on the page and the chat message of the target type and/or the preset theme may be enhanced, thereby improving the information transmission effect and the interaction effect in the interaction process.

Exemplarily, the first target image may be a background image on the interactive page; and the second target image may be a background image and/or a resource cover image on the acquisition page. The association manner associated with the target content may be, for example, including the target content. For example, if the target content is text content, the target image or the preset element may include the text content; and if the target content is image content, the target image or the preset element may include the image content.

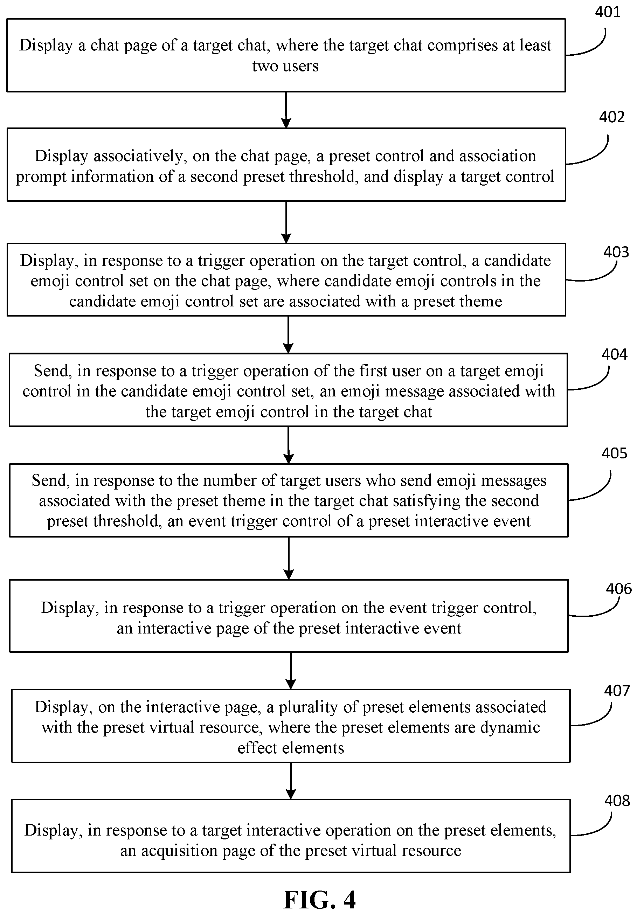

Fig. 4 is a schematic flowchart of an interaction method according to an embodiment of the present disclosure. The embodiment of the present disclosure is optimized based on various optional solutions in the above embodiments. Specifically, the method includes the following steps.

Step 401: a chat page of a target chat is displayed, where the target chat includes at least two users.

Step 402: a preset control and associated prompt information of a second preset threshold are displayed in association, and displaying a target control.

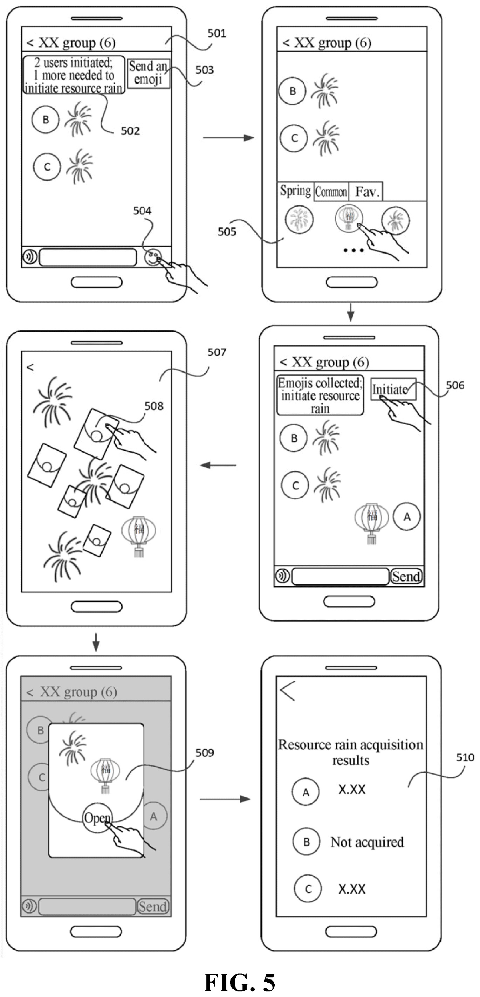

Fig. 5 is a schematic diagram of interface interaction of another interaction method according to an embodiment of the present disclosure. As shown in Fig. 5, a preset control 503 and associated prompt information 502 of a preset threshold are displayed in association on a chat page 501 of a target chat, and a target control 504 is displayed. A user may quickly send a random emoji message of a Spring Festival theme by triggering the preset control 503, or may independently choose an emoji message of the Spring Festival theme to be sent by triggering the target control 504.

Step 403: a candidate emoji control set is displayed on the chat page in response to a trigger operation on the target control, where candidate emoji controls in the candidate emoji control set are associated with a preset theme.

As shown in Fig. 5, assuming that the user wants to independently choose the emoji message to be sent, the user may trigger the target control 504 to present a candidate emoji control set 505, and the candidate emoji controls in the candidate emoji control set are associated with the Spring Festival theme.

Step 404: an emoji message associated with a target emoji control is sent in the target chat in response to a trigger operation of a first user on the target emoji control in the candidate emoji control set.

As shown in Fig. 5, assuming that the first user wants to send a lantern emoji message, the first user may click on a lantern emoji control to send the lantern emoji message.

Step 405: an event trigger control of a preset interactive event is displayed in response to the number of target users who send emoji messages associated with a preset theme in the target chat satisfying a second preset threshold.

As shown in Fig. 5, assuming that user B and user C have already sent firework emoji messages of the Spring Festival theme and the second preset threshold is 3 users, after user A sends the lantern emoji message, the number of target users satisfies the preset threshold, and an event trigger control 506 of a resource rain event is displayed.

Step 406: an interactive page of the preset interactive event is displayed in response to a trigger operation on the event trigger control.

As shown in Fig. 5, when the first user is ready to initiate the resource rain event, the first user may click on the event trigger control 506 to enter an interactive page 507 of the resource rain event. A background image (a first target image) displayed on the interactive page is associated with message content of the emoji messages sent by the target users. As shown in Fig. 5, the background image contains a firework emoji pattern and a lantern emoji pattern, which may enrich the background of the resource rain on the interactive page and improve the interaction effect based on the interactive page. Optionally, the background image may also contain other preset patterns of the Spring Festival theme, which is not specifically limited.

Step 407: a plurality of preset elements associated with a preset virtual resource are displayed on the interactive page, where the preset elements are dynamic effect elements.

As shown in Fig. 5, a plurality of preset elements 508 containing resource covers are displayed on the interactive page.

Step 408: an acquisition page of the preset virtual resource is displayed in response to a target interactive operation on the preset elements.

As shown in Fig. 5, the first user may acquire the resource by clicking on the preset element 508. Optionally, the first user may be allowed to input target interactive operations on the plurality of preset elements 508 within a preset duration, and the number of acquired resources may be determined based on the number of inputs of the target interactive operations. After the preset duration, the preset interactive event ends, and the acquisition page 509 of the preset virtual resource is entered. The resource cover (the second target image) displayed on the acquisition page 509 is associated with the message content of the emoji messages sent by the target users. As shown in Fig. 5, the resource cover contains the firework emoji pattern and the lantern emoji pattern, which may enrich the content of the resource cover and improve the interaction effect based on the resource acquisition. Optionally, the background image may also contain other preset patterns of the Spring Festival theme, which is not specifically limited.

Optionally, after the user triggers the resource cover, a resource acquisition result page 510 may be displayed, and the resource acquisition status of each of the target users may be displayed on the resource acquisition result page 510. As shown in Fig. 5, user A and user C participated in the preset interactive event, but user B did not participate, so the resource acquisition status of user A and user C is displayed, such as the specific number of acquired resources.

According to the interaction method provided by the embodiment of the present disclosure, the preset control, the preset threshold, and the target control for initiating the display of the event trigger control are displayed in the group chat, which facilitates the user to choose an appropriate manner to participate in initiating the display of the event trigger control. The event trigger control is displayed when the number of target users who send emoji messages associated with the preset theme satisfies the preset threshold, and the first user may enter the interactive page of the preset interactive event by triggering the event trigger control. The plurality of dynamic effect elements are displayed on the interactive page, and the acquisition page of the preset virtual resource may be displayed by inputting the target interactive operations on the dynamic effect elements, to acquire the preset virtual resource. This solution may further improve the interaction effect in the group chat and enrich the chat interaction manners.

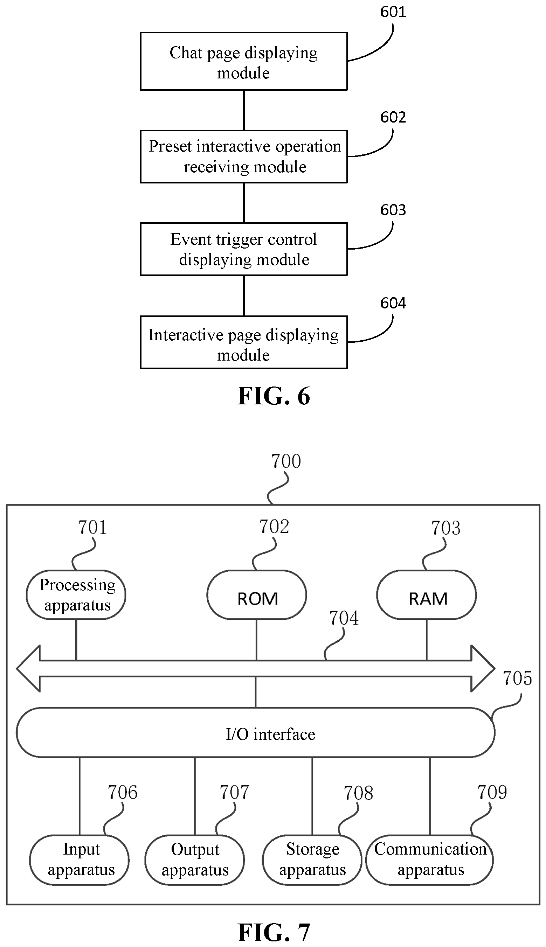

Fig. 6 is a schematic diagram of a structure of an interaction apparatus according to an embodiment of the present disclosure. As shown in Fig. 6, the apparatus is configured at a first user side and includes: a chat page displaying module 601, configured to display a chat page of a target chat, where the target chat includes at least two users; a preset interactive operation receiving module 602, configured to receive a preset interactive operation input by a first user within the target chat based on the chat page; an event trigger control displaying module 603, configured to display an event trigger control of a preset interactive event in response to the preset interactive operation satisfying a preset condition; and an interactive page displaying module 604, configured to display, in response to a trigger operation on the event trigger control, an interactive page of the preset interactive event, where the interactive page is configured for a target user to input a target interactive operation associated with the preset interactive event, to obtain a preset virtual resource, and the target user is a user among the at least two users and includes the first user.

According to the technical solution provided by the embodiment of the present disclosure, the event trigger control for triggering the preset interactive event may be provided in a group chat, and the event trigger control is displayed to a first user when the first user inputs a preset interactive operation and the preset interactive operation satisfies a preset condition. The first user may enter an interactive page of the preset interactive event by triggering the event trigger control and may obtain a preset virtual resource by inputting a target interactive operation associated with the preset interactive event, thereby improving the interaction effect in the group chat and enriching the chat interaction manners.

Optionally, the preset interactive operation satisfying the preset condition includes: a number of messages corresponding to the preset interactive operation within the target chat satisfying a first threshold, and/or a number of target users who input the preset interactive operation within the target chat satisfying a second preset threshold.

Optionally, the target user also includes a second user, and the apparatus further includes: an event trigger control displaying trigger module, configured to trigger to present the event trigger control at a second user side in response to the preset interactive operation satisfying the preset condition.

Optionally, the preset interactive operation includes sending a chat message of a target type.

Optionally, the chat message of the target type includes a chat message associated with a preset theme.

Optionally, the apparatus further includes: a preset control displaying module, configured to display a preset control on the chat page after the displaying the chat page of the target chat, where the preset interactive operation receiving module is further configured to: send the chat message of the target type in the target chat in response to a trigger operation of the first user on the preset control.

Optionally, the chat message of the target type includes an emoji message associated with the preset theme, and the apparatus further includes: a control set displaying module, configured to display a candidate emoji control set on the chat page after the displaying the chat page of the target chat, where candidate emoji controls in the candidate emoji control set are associated with the preset theme, where the preset interactive operation receiving module is further configured to: send an emoji message associated with a target emoji control in the target chat in response to a trigger operation of the first user on the target emoji control in the candidate emoji control set.

Optionally, the apparatus further includes: an associated prompt information displaying module, configured to display, on the chat page, associated prompt information of the first preset threshold and/or the second preset threshold after the displaying the chat page of the target chat, where the associated prompt information includes number information of the first preset threshold and/or the second preset threshold and/or number statistical information of the target users.

Optionally, the apparatus further includes: a preset element displaying module, configured to display, on the interactive page, a plurality of preset elements associated with the preset virtual resource after the displaying the interactive page of the preset interactive event, where the preset elements are dynamic effect elements; and an acquisition page displaying module, configured to display an acquisition page of the preset virtual resource in response to a target interactive operation on the preset elements.

Optionally, at least one of a first target image displayed on the interactive page, a second target image displayed on the acquisition page, or the preset element is associated with target content, where the target content includes message content of the chat message of the target type and/or theme content of the preset theme, and the chat message of the target type includes a chat message associated with the preset theme.

Optionally, the interactive page displaying module includes: a prompt information displaying unit, configured to display prompt information of a preset countdown in response to the trigger operation on the event trigger control; and a first interactive page displaying unit, configured to display the interactive page of the preset interactive event in response to an end of the preset countdown.

Optionally, the target user also includes a second user, and the interactive page displaying module includes: an invitation triggering unit, configured to trigger to send a preset invitation to a second user side in response to the trigger operation on the event trigger control; and a second interactive page displaying unit, configured to display the interactive page of the preset interactive event in response to the second user accepting the preset invitation.

The interaction apparatus provided by the embodiment of the present disclosure may perform the interaction method provided by any embodiment of the present disclosure and has function modules and beneficial effects corresponding to the method performed.

It is worth noting that the units and modules included in the above apparatus are only divided according to functional logic but are not limited to the above division, as long as the corresponding functions may be implemented. In addition, the specific names of the functional units are only for the convenience of distinguishing between each other and are not used to limit the protection scope of the embodiments of the present disclosure.

Fig. 7 is a schematic diagram of a structure of an electronic device according to an embodiment of the present disclosure. Reference is made to Fig. 7 below, which illustrates a schematic diagram of a structure of an electronic device 700 (such as a terminal device or a server in Fig. 7) suitable for implementing the embodiments of the present disclosure. The terminal device in the embodiments of the present disclosure may include, but is not limited to, mobile terminals, such as a mobile phone, a laptop, a digital broadcast receiver, a personal digital assistant (PDA), a tablet computer (PAD), a portable multimedia player (PMP), and a vehicle-mounted terminal (such as a vehicle navigation terminal), and fixed terminals, such as a digital TV and a desktop computer. The electronic device shown in Fig. 7 is only an example and should not impose any limitation on the function and the range of use of the embodiments of the present disclosure.

As shown in Fig. 7, the electronic device 700 may include a processing apparatus (such as a central processing unit and a graphics processing unit) 701, which may perform various appropriate actions and processing according to a program stored in a read-only memory (ROM) 702 or a program loaded from a storage apparatus 708 into a random access memory (RAM) 703. The RAM 703 further stores various programs and data required for operations of the electronic device 700. The processing apparatus 701, the ROM 702, and the RAM 703 are interconnected by means of a bus 704. An editing/output (I/O) interface 705 is also connected to the bus 704.

Usually, the following apparatuses may be connected to the I/O interface 705: an input apparatus 706, such as a touch screen, a touchpad, a keyboard, a mouse, a camera, a microphone, an accelerometer, and a gyroscope; an output apparatus 707, such as a liquid crystal display (LCD), a speaker, and a vibrator; the storage apparatus 708, such as a magnetic tape and a hard disk; and a communication apparatus 709. The communication apparatus 709 may allow the electronic device 700 to perform wireless or wired communication with other devices to exchange data. Although Fig. 7 shows the electronic device 700 having various apparatuses, it should be understood that not all the apparatuses shown here need to be implemented or provided. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried by a non-transitory computer-readable medium, where the computer program contains program code for performing the method shown in the flowchart. In such an embodiment, the computer program may be downloaded and installed from a network via the communication apparatus 709, or installed from the storage apparatus 708, or installed from the ROM 702. When the computer program is executed by the processing apparatus 701, the above functions defined in the method of the embodiments of the present disclosure are executed.

The names of messages or information exchanged between multiple apparatuses in the implementations of the present disclosure are configured for illustrative purposes only and are not used to limit the scope of these messages or information.

The electronic device provided by the embodiment of the present disclosure belongs to the same inventive concept as the interaction method provided by the above embodiment. For technical details not described in detail in this embodiment, reference may be made to the above embodiment, and this embodiment has the same beneficial effects as the above embodiment.

An embodiment of the present disclosure provides a computer storage medium having a computer program stored thereon, where the interaction method provided by the above embodiment is implemented when the program is executed by a processor.

An embodiment of the present disclosure provides a computer program product, including a computer program, where the interaction method provided by the above embodiment is implemented when the program is executed by a processor.

It should be noted that the above computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, where the program may be used by or used in combination with an instruction execution system, apparatus, or device. In the present disclosure, the computer-readable signal medium may include a data signal propagated on a baseband or as a part of a carrier, where computer-readable program code is carried. This propagated data signal may be in multiple forms and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code contained on the computer-readable medium may be transmitted in any suitable medium, including but not limited to a wire, an optical cable, a radio frequency (RF), or any suitable combination thereof.

In some implementations, a client and a server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be contained in the above electronic device or may exist alone without being assembled into the electronic device.

The above computer-readable medium carries one or more programs, and the one or more programs, when executed by the electronic device, cause the electronic device to: present a chat page of a target chat, where the target chat includes at least two users; receive a preset interactive operation input by a first user within the target chat based on the chat page; present an event trigger control of a preset interactive event in response to the preset interactive operation satisfying a preset condition; and present an interactive page of the preset interactive event in response to a trigger operation on the event trigger control, where the interactive page is configured for a target user to input a target interactive operation associated with the preset interactive event, to obtain a preset virtual resource, and the target user is a user among the at least two users and includes the first user.

The computer program code for performing the operations of the present disclosure may be written in one or more programming languages or a combination thereof, where the above programming languages include, but are not limited to, an object-oriented programming language, such as Java, Smalltalk, and C++, and further include conventional procedural programming languages, such as "C" language or similar programming languages. The program code may be executed entirely on a computer of a user, partly on the computer of the user, as a stand-alone software package, partly on the computer of the user and partly on a remote computer, or entirely on the remote computer or a server. In the case of the remote computer, the remote computer may be connected to the computer of the user through any kind of network, including a local area network (LAN) or a wide area network (WAN), or may be connected to an external computer (for example, connected via the Internet using an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, a program segment, or a part of code, and the module, the program segment, or the part of code contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of the module does not constitute a limitation on the module itself under certain circumstances. For example, the chat page displaying module may also be described as "a module for displaying a chat page of a target chat, where the target chat includes at least two users".

The functions described above herein may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), and more.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium includes, but is not limited to, an electronic, magnetic, optical, electromagnetic, infrared, or semiconductor system, apparatus, or device, or any suitable combination thereof. More specific examples of the machine-readable storage medium would include an electrical connection on the basis of one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

According to one or more embodiments of the present disclosure, an interaction method is provided and applied at a first user side, includes: displaying a chat page of a target chat, where the target chat includes at least two users; receiving a preset interactive operation input by a first user within the target chat based on the chat page; displaying an event trigger control of a preset interactive event in response to the preset interactive operation satisfying a preset condition; and displaying, in response to a trigger operation on the event trigger control, an interactive page of the preset interactive event, where the interactive page is configured for a target user to input a target interactive operation associated with the preset interactive event, to obtain a preset virtual resource, and the target user is a user among the at least two users and includes the first user.

According to one or more embodiments of the present disclosure, the preset interactive operation satisfying the preset condition includes: a number of messages corresponding to the preset interactive operation within the target chat satisfying a first threshold, and/or a number of target users who input the preset interactive operation within the target chat satisfying a second preset threshold.

According to one or more embodiments of the present disclosure, the target user also includes a second user, and the method further includes: triggering, in response to the preset interactive operation satisfying the preset condition, a display ofthe event trigger control at a second user side.

According to one or more embodiments of the present disclosure, the preset interactive operation includes sending a chat message of a target type.

According to one or more embodiments of the present disclosure, the chat message of the target type includes a chat message associated with a preset theme.

According to one or more embodiments of the present disclosure, after the displaying the chat page of the target chat, the method further includes: displaying a preset control on the chat page, where the receiving a preset interactive operation input by a first user within the target chat based on the chat page includes: sending the chat message of the target type in the target chat in response to a trigger operation of the first user on the preset control.

According to one or more embodiments of the present disclosure, the chat message of the target type includes an emoji message associated with the preset theme, and after the displaying the chat page of the target chat, the method further includes: displaying a candidate emoji control set on the chat page, where candidate emoji controls in the candidate emoji control set are associated with the preset theme, where the receiving a preset interactive operation input by a first user within the target chat based on the chat page includes: sending an emoji message associated with a target emoji control in the target chat in response to a trigger operation of the first user on the target emoji control in the candidate emoji control set.

According to one or more embodiments of the present disclosure, after the displaying the chat page of the target chat, the method further includes: displaying, on the chat page, associated prompt information of the first preset threshold and/or the second preset threshold, where the associated prompt information includes number information of the first preset threshold and/or the second preset threshold and/or number statistical information of the target users.

According to one or more embodiments of the present disclosure, after the displaying the interactive page of the preset interactive event, the method further includes: displaying, on the interactive page, a plurality of preset elements associated with the preset virtual resource, where the preset elements are dynamic effect elements; and displaying an acquisition page of the preset virtual resource in response to a target interactive operation on the preset elements.

According to one or more embodiments of the present disclosure, at least one of a first target image displayed on the interactive page, a second target image displayed on the acquisition page, or the preset element is associated with target content, where the target content includes message content of the chat message of the target type and/or theme content of the preset theme, and the chat message of the target type includes a chat message associated with the preset theme.

According to one or more embodiments of the present disclosure, the displaying the interactive page of the preset interactive event in response to a trigger operation on the event trigger control includes: displaying prompt information of a preset countdown in response to the trigger operation on the event trigger control; and displaying the interactive page of the preset interactive event in response to an end of the preset countdown.

According to one or more embodiments of the present disclosure, the target user also includes a second user, and the displaying the interactive page of the preset interactive event in response to a trigger operation on the event trigger control includes: triggering to send a preset invitation to a second user side in response to the trigger operation on the event trigger control; and displaying the interactive page of the preset interactive event in response to the second user accepting the preset invitation.

According to one or more embodiments of the present disclosure, an interaction apparatus is provided and configured at a first user side and includes: a chat page displaying module, configured to display a chat page of a target chat, where the target chat includes at least two users; a preset interactive operation receiving module, configured to receive a preset interactive operation input by a first user within the target chat based on the chat page; an event trigger control displaying module, configured to display an event trigger control of a preset interactive event in response to the preset interactive operation satisfying a preset condition; and an interactive page displaying module, configured to display, in response to a trigger operation on the event trigger control, an interactive page of the preset interactive event, where the interactive page is configured for a target user to input a target interactive operation associated with the preset interactive event, to obtain a preset virtual resource, and the target user is a user among the at least two users and includes the first user.

According to one or more embodiments of the present disclosure, an electronic device is provided and includes: one or more processors; and a storage apparatus, configured to store one or more programs, where the one or more programs, when executed by the one or more processors, cause the one or more processors to implement the interaction method provided by the embodiments of the present disclosure.

According to one or more embodiments of the present disclosure, a storage medium including computer-executable instructions is provided, where the computer-executable instructions, when executed by a computer processor, are used to perform the interaction method provided by the embodiments of the present disclosure.

The above description only illustrates preferred embodiments of the present disclosure and applied technical principles. Those skilled in the art should understand that the disclosure scope involved in the present disclosure is not limited to the technical solutions obtained by the specific combination of the above technical features, and should also cover other technical solutions obtained by arbitrary combination of the above technical features or their equivalent features without departing from the above disclosure concept. For example, the above features and the technical features provided in the present disclosure (but not limited to) with similar functions may be replaced each other to form a technical solution.

In addition, although the operations are depicted in a particular order, this should not be understood as requiring the operations to be performed in the particular order shown or in a sequential order. Under certain circumstances, multitasking and parallel processing may be beneficial. Likewise, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable subcombination.

Although the subject matter has been described in terms specific to the structural features and/or method logic actions, it should be understood that the subject matter defined in the appended claims is not necessarily limited to the specific features or actions described above. Conversely, the specific features and actions described above are merely exemplary forms for implementing the claims.

## Claims

1. An interaction method, at a first user side, comprising:
displaying a chat page of a target chat, wherein the target chat comprises at least two users;
receiving a preset interactive operation input by a first user within the target chat based on the chat page;
displaying an event trigger control of a preset interactive event; and
displaying, in response to a trigger operation on the event trigger control, an interactive page of the preset interactive event, wherein the interactive page is configured for a target user to input a target interactive operation associated with the preset interactive event, to obtain a preset virtual resource, and the target user is a user among the at least two users and comprises the first user.

2. The method of claim 1, wherein displaying the event trigger control of the preset interactive event comprises:
displaying, in response to the preset interactive operation satisfying a preset condition, the event trigger control of the preset interactive event.

3. The method of claim 2, wherein responding to preset interactive operation satisfying the preset condition comprises:
responding to a number of messages corresponding to the preset interactive operation within the target chat satisfying a first preset threshold, and/or
responding to a number of target users who input the preset interactive operation within the target chat satisfying a second preset threshold.

4. The method of claim 1, wherein the target user further comprises a second user, and the method further comprises:
triggering, in response to the preset interactive operation satisfying a preset condition, a display of the event trigger control at a second user side.

5. The method of claim 1, wherein the preset interactive operation comprises sending a chat message of a target type.

6. The method of claim 5, wherein the chat message of the target type comprises a chat message associated with a preset theme.

7. The method of claim 5, wherein after displaying the chat page of the target chat, the method further comprises:
displaying a preset control on the chat page,
wherein receiving the preset interactive operation input by the first user within the target chat based on the chat page comprises:
sending, in response to a trigger operation of the first user on the preset control, the chat message of the target type in the target chat.

8. The method of claim 6, wherein the chat message of the target type comprises an emoji message associated with the preset theme; and
wherein after displaying the chat page of the target chat, the method further comprises:
displaying a candidate emoji control set on the chat page, wherein candidate emoji controls in the candidate emoji control set are associated with the preset theme,
wherein receiving the preset interactive operation input by the first user within the target chat based on the chat page comprises:
sending, in response to a trigger operation of the first user on a target emoji control in the candidate emoji control set, an emoji message associated with the target emoji control in the target chat.

9. The method of claim 3, wherein after displaying the chat page of the target chat, the method further comprises:
displaying, on the chat page, associated prompt information of the first preset threshold and/or the second preset threshold, wherein the associated prompt information comprises number information of the first preset threshold and/or the second preset threshold, and/or number statistical information of the target users.

10. The method of claim 1, wherein after displaying the interactive page of the preset interactive event, the method further comprises:
displaying, on the interactive page, a plurality of preset elements associated with the preset virtual resource, wherein the preset elements are dynamic effect elements; and
displaying, in response to a target interactive operation on the preset elements, an acquisition page of the preset virtual resource.

11. The method of claim 10, wherein at least one of a first target image displayed on the interactive page, a second target image displayed on the acquisition page, or the preset element is associated with target content, wherein the target content comprises message content of the chat message of the target type and/or theme content of the preset theme, and the chat message of the target type comprises a chat message associated with the preset theme.

12. The method of claim 1, wherein displaying, in response to the trigger operation on the event trigger control, the interactive page of the preset interactive event comprises:
displaying, in response to the trigger operation on the event trigger control, prompt information of a preset countdown; and
displaying, in response to an end of the preset countdown, the interactive page of the preset interactive event.

13. The method of claim 1, wherein the target user further comprises a second user, and
wherein the displaying, in response to the trigger operation on the event trigger control, the interactive page of the preset interactive event comprises:
triggering, in response to the trigger operation on the event trigger control, sending of a preset invitation to a second user side; and
displaying, in response to the second user accepting the preset invitation, the interactive page of the preset interactive event.

14. An interaction apparatus, wherein the interaction apparatus is configured at a first user side and comprises:
a chat page displaying module, configured to display a chat page of a target chat, wherein the target chat comprises at least two users;
a preset interactive operation receiving module, configured to receive a preset interactive operation input by a first user within the target chat based on the chat page;
an event trigger control displaying module, configured to display an event trigger control of a preset interactive event; and
an interactive page displaying module, configured to display, in response to a trigger operation on the event trigger control, an interactive page of the preset interactive event, wherein the interactive page is configured for a target user to input a target interactive operation associated with the preset interactive event, to obtain a preset virtual resource, and the target user is a user among the at least two users and comprises the first user.

15. An electronic device, comprising:
one or more processors; and
a storage apparatus, configured to store one or more programs,
wherein the one or more programs, when executed by the one or more processors, cause the one or more processors to implement the interaction method of any of claims 1 to 13.

16. A storage medium comprising computer-executable instructions, wherein the computer-executable instructions, when executed by a computer processor, are configured to perform the interaction method of any of claims 1 to 13.
